# EUROPEAN PATENT APPLICATION

(11) **EP 2 209 176 A2**
(43) Date of publication of application: **21.07.2010**
(21) Application number: 10150357.1
(22) Date of filing: 08.01.2010
(51) Int. Cl.: H02G 3/12, H02G 3/16, H02B 1/00

(54) **Separating element for the assembly of racks for electrical mechanisms in flush-mounted boxes**

(30) Priority: 14.01.2009 ES 200900100
(71) Applicant: Schneider Electric Espana, S.A., 08019 Barcelona (ES)
(72) Inventor: Barrio Goñi, Juan Pedro, 31001, Pamplona (Navarra) (ES)
(74) Representative: Bérogin, Francis

(57) **Abstract**

The invention relates to a separating element for the assembly of racks of electrical mechanisms in flush-mounted boxes, consisting of a female part (1) with at least one hole (2) provided with annular grooves (2.1) and a male part (3) with at least one rod (4) provided with annular grooves (4.1), which parts (1 and 3) are coupled together by means of inserting the rods (4) in the holes (2), with the possibility of selectively adjusting the dimension of the assembly in the direction of the coupling to compensate with this element the depth of a flush-mounted box for the installation of electrical mechanisms with respect to the surface of the wall of application.

## Description

### Field of the Art

The present invention relates to the assembly of electrical mechanisms in a flush-mounted manner in the application sites, proposing a separating element which allows adjusting the support of the securing racks for securing the electrical mechanisms in that arrangement.

### State of the Art

In the low voltage electrical installations, the electrical mechanisms such as electrical outlets, switches, push buttons, change-over switches, etc., are normally arranged in a flush-mounted installation by means of housing in a hole made in the wall of application.

These electrical mechanisms are incorporated on a generally metallic carrier rack, by means of which they are secured in the installation, by means of screwing said carrier rack on a box included and secured by means of construction materials in the assembly hole.

The boxes intended for housing the electrical mechanisms in that flush-mounted arrangement are placed in the corresponding walls during construction work, such that in later processes, such as the tiling process or other similar processes for example, the thickness of the walls is modified, whereby occasionally the boxes arranged to house the electrical mechanisms are at a certain depth with respect to the surface of the wall, which makes it difficult to correctly place the carrier rack of the electrical mechanisms in the installation.

Furthermore, in some cases the hole made in the wall to arrange the flush-mounted box for housing the electrical mechanisms has a contour that is larger in some of its parts than that of the securing rack for securing the electrical mechanism to be installed, such that when placing said rack, the latter may be left with no support in the surface of the wall, which makes placement difficult.

To solve these drawbacks, conventional solutions are known which are based on the manufacture *in situ* of wooden blocks to compensate for the depth between the flush-mounted box and the outer surface of the wall of application, these solutions being rather imprecise and furthermore requiring a considerable amount of time which slows and delays the tasks of assembling the electrical mechanisms.

### Object of the invention

According to the present invention, a separating element for the assembly of the securing racks for securing electrical mechanisms with respect to flush-mounted boxes is proposed, whereby an adjustable support surface is determined for the seating of the rack of the electrical mechanisms in a position aligned with the surface of the wall of application.

This element object of the invention consists of a female part determining at least one through hole in the axial direction, provided with annular grooves in its wall and open on one side, and a male part determining in a corresponding manner at least one rod provided with annular grooves in its contour, both parts having a correlative orifice passing axially through them.

One of the parts, for example the female part, determines a lower shape for being supported on the flush-mounted box for housing the electrical mechanisms, whereas the other part, for example the male part, determines an upper base for the seating thereon of the rack of the electrical mechanism to be installed, such that by means of relative axial shifting between both parts, a dimension can be regulated to compensate for the difference of depth between the flush-mounted box and the surface of the wall of application, for the seating of the rack of the corresponding electrical mechanism, such that said rack is perfectly flush in relation to the surface of the wall.

This separating element therefore allows overcoming in a fast, simple and precise manner the difference of depth between the flush-mounted boxes for housing the electrical mechanisms and the surface of the wall of application, for the suitable seating of the securing rack for securing the corresponding electrical mechanism, improving the conventional methods that are used for this purpose, such that a solution is achieved which has very advantageous constructive and functional features.

### Description of the Drawings

Figure 1 shows an exploded perspective view of an embodiment of the separating element object of the invention.
Figure 2 shows a perspective view of the separating element assembled.

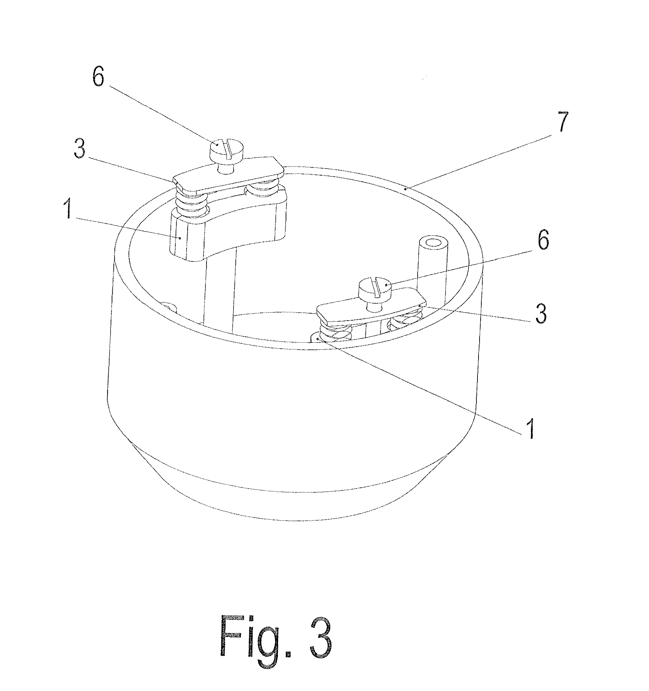

Figure 3 shows a perspective view of the application of the separating element on a flush-mounted box.

### Detailed Description of the Invention

The object of the invention relates to an accessory element for a box of the type used to house electrical mechanisms, intended for establishing support and adjustable separation of the rack of the electrical mechanism with respect to the flush-mounted box in a hole made in the wall of application.

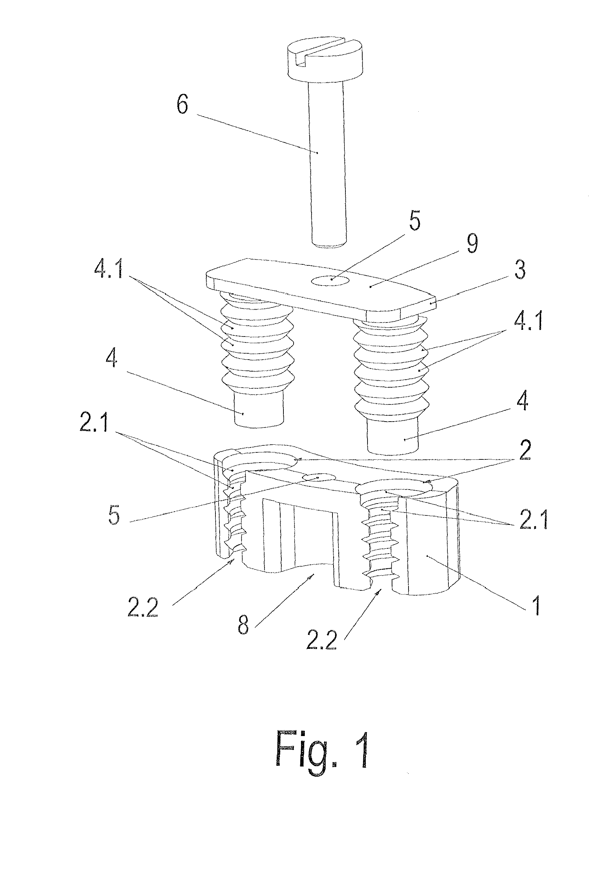

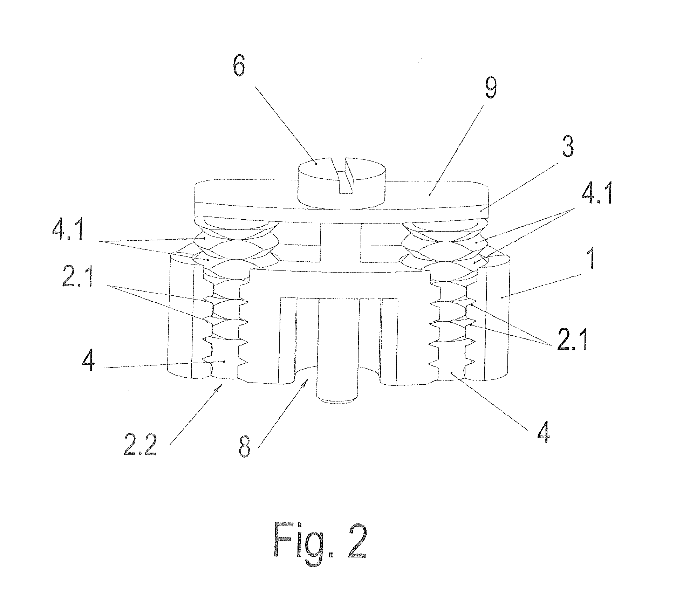

As can be seen in Figures 1 and 2, the proposed element consists of a female part (1), which determines at least one through hole (2) provided with annular grooves (2.1) in its wall and with a side opening (2.2) along the entire length, and a male part (3) which accordingly determines at least one rod (4) provided with annular grooves (4.1) in its contour.

It is therefore an assembly the two component parts (1 and 3) of which can be fit together by means of inserting the rod or rods (4) of the male part (3) in the hole or holes (2) of the female part (1), the dimension of the assembly being able to be selectively adjusted in the direction of the coupling, by means of axial shifting of the rod or rods (4) through the corresponding holes (2), the grooves (4.1) of the rods (4) forcibly passing over the grooves (2.1) of the holes (2), which is possible as a result of a slight diametric deformation of the holes (2) allowed by the side opening (2.2) thereof, such that a fitting occurs between the grooves (2.1 and 4.1) by elastic recovery, determining a locking that assures the retention of the assembly in the desired position.

To that end, a preferred embodiment is provided in which the female part (1) is provided with two through holes (2) and the male part (3) is accordingly provided with two rods (4), but the female part (1) could also be provided with a single hole (2), or more than two, and accordingly the male part (3) with one or more than two rods (4), the functional concept of the assembly according to the invention remaining unchanged.

The two proposed component parts (1 and 3) of the element furthermore and accordingly comprise respective orifices (5) through which a securing screw (6) with respect to the flush-mounted box (7) of application is arranged, the female part (1) determining in the lower portion a support shape (8) for being supported on the box (7), whereas the male part (3) determines in the upper portion a base (9) for supporting thereon the rack (not depicted) of the electrical mechanism to be installed.

In that arrangement, the rack of the electrical element to be installed is supported on the base (9) of the proposed element, said rack being secured with the securing screw (6) on the box (7) of application, such that by means of tightening said screw (6), the relative shifting between the parts (1 and 3) until achieving the dimension of the assembly necessary for the support of the rack of the electrical element to be flush with the surface of the wall of application is determined, thus allowing compensating in a simple and fast manner for the depth at which the flush-mounted box (7) is located with respect to the surface of the wall, for a suitable assembly of the installation of the corresponding electrical element.

A reverse composition of the formation of the assembly of the proposed element does not alter the concept thereof, i.e., it can be the male part (3) which determines at the lower portion the support shape (8) for being supported on the flush-mounted box (7) of application, and it can be the female part (1) which determines in the upper portion the base (9) for supporting the rack of the electrical element to be installed.

## Claims

1. A separating element for the assembly of racks of electrical mechanisms in flush-mounted boxes, of the type intended for compensating for the depth of a flush-mounted box (7) for housing an electrical mechanism with respect to the surface of the wall of installation, **characterized in that** it consists of a female part (1) determining at least one through hole (2) provided with annular grooves (2.1) in its wall and a male part (3) accordingly determining at least one rod (4) provided with annular grooves (4.1) in its contour, said parts (1 and 3) being coupled by means of inserting the rods (4) of part (3) in the holes (2) of part (1), with the possibility of selectively adjusting the dimension of the assembly in the direction of the coupling.

2. The separating element for the assembly of racks of electrical mechanisms in flush-mounted boxes according to claim 1, **characterized in that** the assembly of the coupled parts (1 and 3) determines in the lower portion a support shape (8) for being supported on the flush-mounted box (7) of application, and in the upper portion a base (9) for supporting the support rack of the electrical element to be installed.

3. The separating element for the assembly of racks of electrical mechanisms in flush-mounted boxes according to claims 1 and 2, **characterized in that** the parts (1 and 3) accordingly determine respective orifices (5) through which a securing screw (6) for securing it on the flush-mounted box (7) of application is arranged, said screw (6) also establishing the securing of the support rack for supporting the electrical element to be installed.

4. The separating element for the assembly of racks of electrical mechanisms in flush-mounted boxes according to claim 1, **characterized in that** the holes (2) of part (1) have a side opening (2.2) as a result of which elastic radial deformation of said holes (2) is possible for the passage of the grooves (4.1) of the contour of the rods (4) of the male part (3) through the grooves (2.1) of said holes (2) and the retention locking between the mentioned grooves (2.1 and 4.1) in selective axial positions of the assembly.
